# EUROPÄISCHE PATENTSCHRIFT

(11) **EP 2 750 950 B1**
(45) Veröffentlichungstag und Bekanntmachung des Hinweises auf die Patenterteilung: **21.02.2018**
(21) Anmeldenummer: 12730454.1
(22) Anmeldetag: 19.06.2012
(51) Int. Cl.: B60W 30/188

(54) **VERFAHREN ZUR UNTERSTÜTZUNG EINES FAHRERS EINES KRAFTFAHRZEUGS**
METHOD FOR ASSISTING A DRIVER OF A MOTOR VEHICLE
PROCÉDÉ D'ASSISTANCE À UN CONDUCTEUR D'UN VÉHICULE AUTOMOBILE

(30) Priorität: 29.08.2011 DE 102011081707
(43) Veröffentlichungstag der Anmeldung: 09.07.2014
(73) Patentinhaber: Robert Bosch GmbH, 70442 Stuttgart (DE)
(72) Erfinder: HORST, Hans-Georg, 71229 Leonberg (DE); GOTTWICK, Ulrich, 70192 Stuttgart (DE); BINDER, Juergen, 70794 Filderstadt-Plattenhardt (DE); BIURRUN SOTELO, Rodrigo, 52074 Aachen (DE)
(86) Internationale Anmeldenummer: PCT/EP2012/061697
(87) Internationale Veröffentlichungsnummer: WO 2013/029823

(56) Entgegenhaltungen:
- EP-A1- 1 642 767
- EP-A1- 2 327 574
- DE-A1- 19 753 764
- DE-A1-102009 001 293

## Beschreibung

Die Erfindung betrifft ein Verfahren zur Unterstützung eines Fahrers eines Elektrofahrzeuges bei einem Fahrvorgang zur Überwindung eines bodenniedrigen Hindernisses mit langsamer Geschwindigkeit, sowie eine Steuereinrichtung, die dazu ausgelegt ist, ein solches Verfahren durchzuführen.

### Stand der Technik

Bei einer Fahrt mit einem Kraftfahrzeug mit einem konventionellen Handschaltgetriebe und Brennkraftmaschine steuert der Fahrer manuell im Zusammenspiel mit Fahrpedal und Kupplung einen Anfahrvorgang aus dem Stillstand über ein Hindernis (z.B. ein Bordstein) so, dass zunächst bei geringem Kupplungsschlupf ein hohes Drehmoment an die Räder übertragen wird, um das Hindernis zu überwinden, ohne dabei den Motor abzuwürgen. Nach dem Überwinden des Hindernisses öffnet der Fahrer selbst die Kupplung wieder, sobald sich das Fahrzeug in Bewegung setzt, so dass der Kraftschluss wieder unterbrochen wird und das Fahrzeug schnell ausrollt.

Bei einem Kraftfahrzeug mit Wandler-Automatikgetriebe erfolgt aufgrund der Charakteristik des Drehmomentwandlers eine moderate Drehmomententfaltung bei der Überwindung eines Bordsteins, so dass dieser kontrolliert und unter stetiger, ruckfreier Fortbewegung des Kraftfahrzeuges überwunden werden kann.

Problematisch ist hingegen bisher der Anfahrvorgang mit einem Elektrofahrzeug über ein stufenförmiges Hindernis. Auch hier fordert der Fahrer zunächst zur Überwindung des Hindernisses ein erhöhtes Drehmoment an, indem er das Fahrpedal betätigt. Bei der Fahrt nach dem Überwinden des Hindernisses beschleunigt das Fahrzeug ruckartig nach vorne, da das aufgebaute hohe Drehmoment noch immer auf die angetriebenen Räder wirkt. Bisher ist es nicht möglich, solche Fahrsituationen bei Elektrofahrzeugen sicher und zuverlässig zu beherrschen, in welchen das Elektrofahrzeug aus einer langsamen Fahrt in der gewünschten Fahrtrichtung derart stark beschleunigt, dass eine übermäßig hohe Geschwindigkeit erreicht wird. Es kann eine relativ lange Zeit vergehen, bis der Fahrer das Schreckmoment überwunden hat und angemessen reagiert (z.B. bremst). Daher besteht die akute Gefahr einer Kollision zum Beispiel mit einem anderen Fahrzeug in der Nähe des Hindernisses.

Die EP 2 372 574 A1 beschreibt ein Verfahren zur Unterstützung eines Fahrers eines Fahrzeuges bei einem Manöver zur Überwindung eines Hindernisses mit einer geringen Geschwindigkeit, wobei das Hindernis eine Höhe aufweist, die von dem Fahrzeug überwunden werden kann. Das Verfahren umfasst die folgenden Schritte: Übertragen eines hohen Drehmoments oder einer Kraft an die Räder zur Überwindung des Hindernisses, Erfassen, ob das Hindernis überwunden worden ist, Reduzieren des Drehmoments oder der an die Räder übertragenen Kraft oder automatisches Abbremsen des Fahrzeuges unmittelbar nach Überwindung des Hindernisses.

Die DE 10 2009 001 293 A1 beschreibt ein Verfahren zum Betreiben eines Antriebsstrangs eines Kraftfahrzeuges, wobei der Antriebsstrang ein Antriebsaggregat, ein Fahrpedal und ein Bremspedal aufweist, wobei dann, wenn das Fahrpedal sowie das Bremspedal nicht betätigt sind, der Antriebsstrang in einem geschwindigkeitsgeregelten Drehbetrieb derart wird, dass ein Geschwindigkeits-Sollwert mit einem Geschwindigkeits-Istwert verglichen und auf Grundlage der Abweichung zwischen dem Geschwindigkeits-Sollwert und dem Geschwindigkeits-Istwert als Stellgröße ein Kriechmoment erzeugt wird, so dass sich der Geschwindigkeits-Istwert dem Geschwindigkeits-Sollwert annähert.

### Offenbarung der Erfindung

Das erfindungsgemäße Verfahren zur Unterstützung eines Fahrers eines Elektrofahrzeuges bei einem Fahrvorgang zur Überwindung eines bodenniedrigen Hindernisses mit langsamer Geschwindigkeit, weist die folgenden Schritte auf: Übertragen eines Drehmoments an die anzutreibenden Räder zur Überwindung des Hindernisses, Erkennen, dass das Hindernis überwunden worden ist, und automatisches Verringern des Drehmoments und/oder automatische Erzeugung eines Bremsmomentes zum Verzögern des Kraftfahrzeugs unmittelbar nach dem Erkennen.

Gemäß des erfindungsgemäßen Verfahrens wird das Kraftfahrzeug elektromotorisch angetrieben. Dabei erfolgt das Erkennen der Hindernisüberwindung durch Auswerten einer Kenngröße des Elektromotors, die insbesondere charakteristisch für eine Belastung des Elektromotors ist.

Anhand solcher Kenngrößen (z.B. aufgenommener Motorstrom) kann schnell und zuverlässig eine Überwindung des Hindernisses erkannt werden, so dass rechtzeitig die erforderlichen Fahrzeugreaktionen ausgelöst werden können.

Ferner wird erfindungsgemäß eine Steuereinrichtung zur Durchführung eines solchen Verfahrens bereitgestellt.

Unter dem Begriff "bodenniedriges Hindernis" werden dabei Hindernisse verstanden, die sich beispielsweise mit einer Höhe von einem Untergrund, etwa dem Boden, einer Parklücke aufwärts erstrecken, die kleiner als 40 cm, bevorzugt kleiner als 30 cm, besonders bevorzugt kleiner als 20 cm ist. In den Bereich unter 20 cm fallen bspw. nicht abgesenkte Bordsteine. Unter den Begriff "bodenniedriges Hindernis" fallen auch Objekte, die sich nicht direkt vom Boden aufwärts erstrecken, sondern sich bis in einem oben genannten Abstand über dem Boden befinden.

Unter dem Begriff "Elektrofahrzeuge" sind im Wortlaut dieses Textes beispielsweise ausschließlich über elektrische Energie angetriebene Kraftfahrzeuge, aber auch Hybridfahrzeuge zu verstehen, die Kombinationen von Elektromotoren mit Verbrennungskraftmaschinen oder Brennstoffzellen aufweisen.

### Vorteile der Erfindung

Die Erfindung ermöglicht eine sichere und zuverlässige Beherrschung des Anfahrens an einem Hindernis bei Elektrofahrzeugen. Die Erfindung erlaubt eine gleichmäßige und ruckfreie Fortbewegung des Kraftfahrzeugs bei der Überwindung des Hindernisses. Der Fahrer muss hierfür keine besondere Maßnahmen ergreifen bzw. auf das exakte Zusammenspiel von Fahrpedal und Bremspedal achten. Die zuvor beschriebene Gefahr von Kollisionen aufgrund überraschender Fahrzeugreaktionen ist beseitigt. Das Problem, dass das Kraftfahrzeug durch ein Hindernis in seinem Bewegungsweg blockiert wird, wodurch der Antrieb überhitzen kann, ist ebenfalls beseitigt. Beim erfindungsgemäßen Verfahren wird das Antriebsmoment und damit die Stromaufnahme der elektrischen Antriebsmaschine begrenzt. Hierdurch werden beim Anfahren hohe Energiebelastungen und Stromspitzen der elektrischen Antriebsmaschine vermieden und damit eine thermische Überlastung der elektrischen Antriebsmaschine bzw. deren Leistungselektronik verhindert.

Gemäß einer Ausgestaltung des erfindungsgemäßen Verfahrens wird zur Erkennung bzw. Erfassung der Überwindung des Hindernisses wenigstens eine externe und/oder eine interne Größe, wie die Fahrbahnneigung und/oder Zustände des Kraftfahrzeugs, wie die Geschwindigkeit und/oder die Beschleunigung des Kraftfahrzeuges erfasst, und ausgewertet.

Dadurch können die Steuer- oder Regelalgorithmen einer das erfindungsgemäße Verfahren ausführenden Steuereinrichtung optimal auf die gegebenen Randbedingungen bzw. die spezifische Betriebssituation des Kraftfahrzeugs angepasst werden.

Bei einer Ausführungsform des erfindungsgemäßen Verfahrens wird zum Erkennen der Hindernisüberwindung ein Druck in einem Reifen des Kraftfahrzeugs ausgewertet.

Reifendrucküberwachungssysteme sind aus dem Stand der Technik bekannt und können einfach und kostengünstig realisiert werden. In modernen Fahrzeugen sind Reifendrucküberwachungssysteme meistens ohnehin vorhanden, so dass die vom Reifendrucküberwachungssystem gelieferten Signale für den vorliegenden Zweck mit verwendet werden können. Der erforderliche Zusatzaufwand für das erfindungsgemäße Verfahren wird beim Vorhandensein solcher Reifendrucküberwachungssysteme minimal.

Gemäß einer Ausgestaltung des erfindungsgemäßen Verfahrens wird eine Hindernissituation dann erkannt, wenn ein erkannter Anfahrwunsch des Fahrers vorliegt, ein Fahrpedalgradient einen vorgegebenen Schwellenwert unterschreitet und bei einem Aufbau eines Antriebsmoments auf einen vorgegebenen oberen Grenzwert keine Beschleunigung des Kraftfahrzeugs in Fahrtrichtung erzielt wird.

Unter dem Begriff "Fahrpedalgradient" wird dabei die Veränderung der Pedalstellung in Abhängigkeit von der Zeit verstanden. Die Berücksichtigung des Fahrpedalgradienten basiert auf der Erkenntnis, dass ein Fahrer bei der Steuerung des Kraftfahrzeugs zur Überwindung eines Hindernisses das Fahrpedal nur langsam bzw. zögerlich betätigt. Durch eine derartige Erkennung der Hindernissituation, anhand der zuvor genannten Randbedingungen, kann auf die Notwendigkeit einer Anfahrunterstützung geschlossen werden und so sichergestellt werden, dass das erfindungsgemäße Verfahren nur dann abläuft, wenn es auch wirklich erforderlich ist.

Beispielsweise wird zur Bestimmung des Anfahrwunsches die Stellung einer Feststellbremse und/oder einer Betriebsbremse erfasst.

So kann sichergestellt werden, dass eine erfasste Änderung des Fahrwiderstandes nicht durch Abbremsen zustande gekommen ist.

Bei einer Ausgestaltung des erfindungsgemäßen Verfahrens wird zur Bestimmung des Anfahrwunsches die Stellung eines Wählorgans, insbesondere eines Wählhebels erfasst, der zum Anwählen von verschiedenen getriebeseitig einzulegenden Fahrstufen und/oder zum Anwählen von verschiedenen Fahrprogrammen in verschiedene Wählpositionen bewegbar ist.

Aus der Stellung des Wählhebels kann zuverlässig ein Anfahrwunsch abgeleitet werden.

Gemäß einer Ausführungsvariante des erfindungsgemäßen Verfahrens wird das Hindernis über eine Umfeldsensorik oder eine telemetrische Einrichtung erkannt. Dabei ist die Umfeldsensorik insbesondere als ein Kamera-, ein Ultraschall-, ein Radar- und/oder ein Lidarsystem ausgeführt. Durch die Möglichkeit des Einsatzes bzw. der Kombination verschiedener Sensor-Typen kann eine verbesserte Zuverlässigkeit bei sich ändernden äußeren Bedingungen (Regen, Nebel etc.) erreicht werden. Mittels eines Kamerabildes können bspw. stufenförmige Hindernisse identifiziert werden.

### Kurze Beschreibung der Zeichnungen

Fig. 1 zeigt ein Diagramm mit mehreren zeitabhängigen Graphen;
Fig. 2a zeigt einen Graphen, bei dem das Motorenmoment der elektrischen Antriebsmaschine beim Anfahren am Berg und am Bordstein als Funktion der Zeit dargestellt ist;
Fig. 2b zeigt einen Graphen, der den zeitlichen Verlauf der Beschleunigung des Kraftfahrzeugs beim Anfahren am Berg und am Bordstein darstellt, und
Fig. 3 zeigt ein Flussdiagram eines erfindungsgemäßen Verfahrens.

### Ausführungsformen der Erfindung

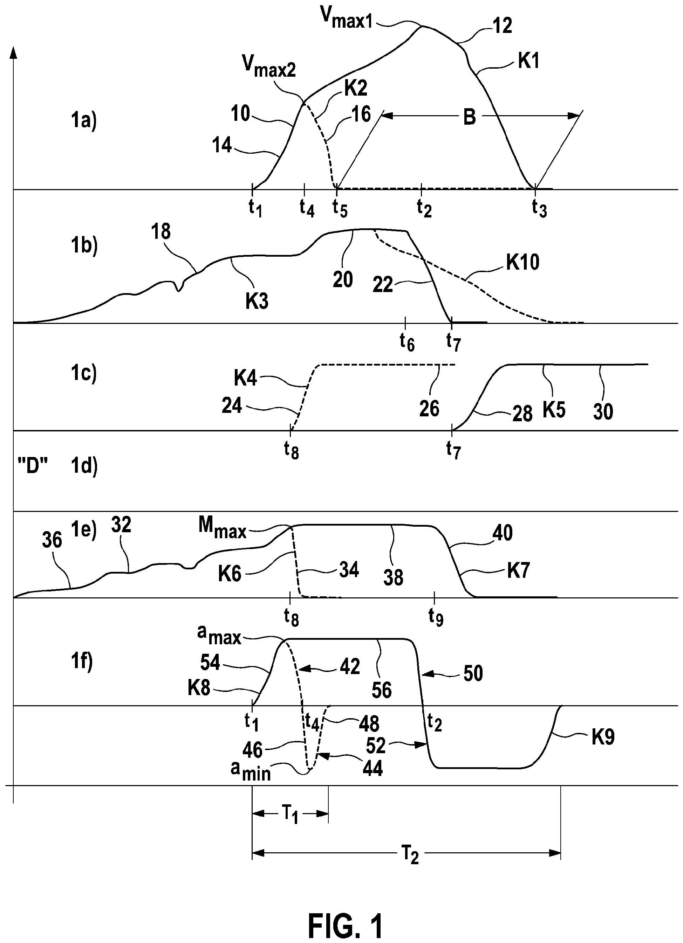

In Fig. 1 ist der zeitliche Ablauf einer Ausführungsform des erfindungsgemäßen Verfahrens dargestellt.

Den einzelnen Graphen 1a) bis 1f) der Fig. 1 liegt jeweils der gleiche Zeitmaßstab zugrunde. In den einzelnen Graphen ist durch die gestrichelte Kurve jeweils der zeitliche Verlauf der jeweiligen in Y-Richtung aufgetragenen Ordinatengröße bei dem erfindungsgemäßen Verfahren dargestellt, bei dem eine automatische Ansteuerung der Antriebseinrichtungen sowie der Verzögerungseinrichtungen eines Elektrofahrzeuges erfolgt. Entsprechend ist durch die durchgezogenen Kurven der Verlauf der einzelnen Ordinatengrößen bei einem herkömmlichen Anfahren des Elektrofahrzeugs dargestellt. Das heißt der Fahrer steuert in herkömmlicher Weise mit Gaspedal und Bremspedal den Anfahrvorgang.

Der Graph 1a zeigt die Fahrzeuggeschwindigkeit als Funktion der Zeit. Die Kurve K1, die den Verlauf der Fahrzeuggeschwindigkeit bei einem herkömmlichen Anfahren des Elektrofahrzeugs zeigt, weist einen Anstiegsabschnitt 10 auf, der zum Zeitpunkt t₁ ausgehend vom Wert 0 steil ansteigt. Die Kurve K1 zeigt ein erstes Geschwindigkeitsmaximum Vₘₐₓ₁, was mit anderen Worten heißt, dass sich die zunächst stark ansteigende Fahrzeuggeschwindigkeit allmählich abschwächt, bis die Fahrzeuggeschwindigkeit im Zeitpunkt t₂ das Maximum Vₘₐₓ₁ erreicht. Nach dem Durchlaufen des Maximums Vₘₐₓ₁ fällt die Fahrzeuggeschwindigkeit, wie durch den fallenden Abschnitt 12 wiedergegeben, steil ab und erreicht zum Zeitpunkt t₃ erneut den Wert 0.

Die gestrichelte Kurve K2 in Fig. 1a gibt den zeitlichen Verlauf der Fahrzeuggeschwindigkeit bei dem erfindungsgemäßen Verfahren wieder. Zunächst verläuft ein Steilabschnitt 14 der Kurve K2 in Übereinstimmung mit dem Verlauf der Geschwindigkeit beim herkömmlichen Verfahren. Diese Übereinstimmung ist dadurch zu erklären, dass erst zum Zeitpunkt t₄ die Überwindung des Bordsteins erfolgt und vor dem Zeitpunkt t₄ beim herkömmlichen und beim erfindungsgemäßen Verfahren eine Beschleunigung des Elektrofahrzeugs im Ansprechen auf den durch das Niederdrücken des Fahrpedals angeforderten Antriebsmomentenwunsch erfolgt.

Sobald das vom Fahrer über eine Betätigung des Fahrpedals angeforderte Antriebsmoment ausreicht, um das Elektrofahrzeug gegen den Fahrtwiderstand des Hindernisses zu überfahren, steigt zum Zeitpunkt t₁ die Geschwindigkeit ausgehend vom Wert 0 steil an, wie durch den steigenden Steilabschnitt 14 veranschaulicht wird. Die Kurve K2 durchläuft zum Zeitpunkt t₄ ein zweites Geschwindigkeitsmaximum Vₘₐₓ₂. Nach Durchlaufen des zweiten Maximums Vₘₐₓ₂ fällt die Geschwindigkeit, wie durch den fallenden Steilabschnitt 16 beschrieben, zügig ab und erreicht zum Zeitpunkt t₅ den Wert 0.

Fig. 1b zeigt die Stellung des Fahrpedals als Funktion der Zeit. Die Kurve K3, die den zeitlichen Verlauf beim herkömmlichen Verfahren zeigt, lässt sich grob in drei Abschnitte unterteilen, nämlich im Einzelnen in einen Anstiegsabschnitt 18, einen annähernd parallel zur Abszisse verlaufenden Parallelabschnitt 20 und einen steil fallenden Steilabschnitt 22.

Die geringe Steigung des Anstiegsabschnitts 18 zeigt ein langsames Niederdrücken des Fahrpedals durch den Fahrer an. Das heißt, der Fahrer erkennt die Situation des Anfahrens am Bordstein und fordert durch eine langsame Fahrpedalbetätigung ein entsprechendes Antriebsmoment an. Der Anstiegsabschnitt geht kontinuierlich in den Parallelabschnitt 20 über. Dies bedeutet mit anderen Worten, dass ab einem bestimmten Zeitpunkt das Fahrpedal nicht weiter ausgelenkt wird, sondern -wie durch den Parallelabschnitt 20 beschrieben- eine Weile konstant gehalten wird. Zum Zeitpunkt t₆ erfährt der Fahrer eine starke Beschleunigung des Kraftfahrzeuges und lässt daraufhin das Fahrpedal plötzlich los, so dass das Fahrpedal Zeitpunkt t₇ wieder seine Ruhelage erreicht.

Im Graph 1c ist entlang der Ordinate das das Elektrofahrzeug verzögernde Bremsmoment und entlang der Abszisse die Zeit aufgetragen. Die Kurve K4 zeigt den Verlauf beim erfindungsgemäßen Verfahren. An der Kurve K4 lassen sich zwei Teilabschnitte definieren, ein steil ansteigender Steilabschnitt 24 sowie ein etwa parallel zur x-Achse verlaufender Parallelabschnitt 26. Zum Zeitpunkt t₈ erfasst die erfindungsgemäße Steuereinrichtung mittels entsprechender Sensoren, dass der Bordstein überwunden wurde. Um ein ungewolltes starkes Beschleunigen des Kraftfahrzeugs nach vorne zu verhindern, wird das Elektrofahrzeug-wie durch den Steilabschnitt 24 dargestellt- durch einen Bremseingriff, der beispielsweise von einer von einem elektronischen Stabilisierungsprogramm (ESP) kontrollierten Bremse bereitgestellt werden kann, unmittelbar nach der Überwindung des Bordseteins automatisch verzögert.

Der Verlauf des Bremsmomentes beim herkömmlichen Verfahren wird durch die Kurve K5 beschrieben. Die Kurve K5 stimmt hinsichtlich des qualitativen Verlaufs mit der Kurve K4 überein und weist erneut einen steil ansteigenden Steilabschnitt 28 sowie einen Parallelabschnitt 30 auf. Der Steilabschnitt 28 steigt zum Zeitpunkt t₇, in dem die Reaktion des Fahrers auf die plötzliche Beschleunigung des Kraftfahrzeuges nach Überwinden des Bordsteins einsetzt und der Fahrer das Bremspedal schnell niederdrückt, steil an. Zum gleichen Zeitpunkt t₇, hat -wie in Fig. 1b gezeigt- das Fahrpedal seine Ruhelage erreicht, was heißt, dass der Fahrer im Zeitpunkt t₇ den Fuß vom Fahrpedal zum Bremspedal wechselt. Die Kurve K5 verläuft aufgrund der wesentlich langsameren Reaktion des Fahrers im Vergleich zum automatischen Bremseingriff zeitlich um eine bestimmte Zeit in positiver x-Richtung versetzt zur Kurve K4.

Der Graph1d zeigt an, dass sich die getriebeseitig eingelegte Fahrstufe durchgehend auf der Position "D" befindet.

Im Graphen 1e ist das Antriebsmoment des Kraftfahrzeugs als Funktion der Zeit aufgetragen. Dabei beschreibt die Kurve K6 den Verlauf des Antriebsmomentes beim erfindungsgemäßen Verfahren. Die Kurve K6 zeigt einen flach ansteigenden Anstiegsabschnitt 32, der zum Zeitpunkt t₈ ein lokales Maximum Mₘₐₓ erreicht und nach dem Durchlaufen des Maximums Mₘₐₓ in einen steil fallenden Steilabschnitt 34 übergeht. Dieser fallende Steilabschnitt 34 beschreibt eine von der erfindungsgemäß ausgebildeten Steuereinrichtung unmittelbar nach dem Erkennen der Überwindung des Hindernisses (Zeitpunkt t₄) veranlasste zügige Verringerung des Antriebsmomentes. Dabei ist das auf die angetriebenen Räder übertragene Antriebsmoment auf die sich aufbauende Bremskraft (Fig. 1c) abgestimmt, so dass ein schnelles aber komfortables Abbremsen ermöglicht wird. Ein Vergleich zwischen den Fig. 1e und 1c zeigt, dass das Antriebsmoment bei beginnender Bremskraft auf Null reduziert wird, so dass die Bremse nicht übermäßig belastet wird.

Die Kurve K7 veranschaulicht den Verlauf des Antriebsmomentes beim herkömmlichen Verfahren. Die Kurve K7 zeigt einen flach ansteigenden Anstiegsabschnitt 36, der mit dem Anstiegsabschnitt 32 der Kurve K6 deshalb übereinstimmt, weil beim herkömmlichen Verfahren und beim erfindungsgemäßen Verfahren vor der Überwindung des Hindernisses (zum Zeitpunkt t₄) das Antriebsmoment jeweils über die Fahrpedalbetätigung (Fig. 1b) des Fahrers angefordert wird. Der Anstiegsabschnitt 36 geht zum Zeitpunkt t₈ in einen parallel zur Abszisse verlaufenden Parallelabschnitt 38 über, der seinerseits zum Zeitpunkt t₉ in einen fallenden Steilabschnitt 40 übergeht.

Fig. 1f zeigt den zeitlichen Verlauf der Beschleunigungen des Kraftfahrzeuges.
Die Beschleunigungskurven entsprechen dabei den ersten zeitlichen Ableitungen der in Fig. 1a dargestellten Geschwindigkeitskurven. Die Kurve K8 veranschaulicht die Beschleunigung des Kraftfahrzeugs als Funktion der Zeit beim erfindungsgemäßen Verfahren. Die Kurve K8 weist einen oberen Peak-Abschnitt 42 in der Art einer nach unten geöffneten Parabel auf, zu der alle Y-Koordinaten, d.h. Fahrzeugbeschleunigungen positiv sind (Beschleunigung des Elektrofahrzeugs im engeren Sinne). Der obere Peak-Abschnitt 42 stellt dar, wie die Fahrzeugbeschleunigung zum Zeitpunkt t₁ zunächst stark ansteigt und rasch einen Maximalwert aₘₐₓ erreicht, um sich nach dem Durchlaufen des Maximums aₘₐₓ unter dem Einfluss des automatischen Bremseingriffs bei gleichzeitiger Reduzierung des Antriebsmomentes steil und schnell abzuschwächen, bis die Fahrzeugbeschleunigung zunächst einen Nulldurchgang (in dem die Fahrzeuggeschwindigkeit für einen Augenblick konstant ist) durchläuft. Nach dem Nulldurchgang geht die Kurve K8 in einen parabelförmigen unteren Peak-Abschnitt 44 über, zu dem alle Y-Werte negativ sind (Verzögerung des Kraftfahrzeuges im engeren Sinne). Die Verzögerung des Kraftfahrzeugs nimmt nach dem Nulldurchgang, der im Zeitpunkt t₄ erfolgt, zunächst stark zu, wie durch den negativen Steilabschnitt 46 beschrieben, durchläuft ein lokales Minimum aₘᵢₙ und nimmt danach, wie durch den steigenden Abschnitt 48 dargestellt, allmählich ab. Insgesamt zeigt die Kurve K8 einen periodischen Kurvenverlauf, so dass sich eine erste Periodendauer T₁ definieren lässt.

Die Kurve K9, die den zeitlichen Verlauf der Fahrzeugbeschleunigung beim herkömmlichen Verfahren beschreibt, zeigt einen im ersten Quadranten liegenden und damit Beschleunigungen des Kraftfahrzeugs im engeren Sinne repräsentierenden oberen trapezförmigen Abschnitt 50, der sich nach einem Nulldurchgang mit geändertem Vorzeichen in etwa wiederholt, so dass ich insgesamt ein annähernd periodischer Verlauf für die Kurve K9 ergibt. Damit lässt sich eine zweite Periodendauer T₂ definieren. Nach dem Nulldurchgang, der zum Zeitpunkt t₂ erfolgt, liegt die Kurve K9 mit einem unteren trapezförmigen Abschnitt 52 im vierten Quadranten, was heißt, dass zu den entsprechenden Zeitpunkten die Beschleunigungen des Elektrofahrzeugs negativ sind.

Der obere trapezförmige Abschnitt 50 weist einen Steilabschnitt 54 auf, der mit einem Steilabschnitt der Kurve K8 des erfindungsgemäßen Verfahrens übereinstimmt und eine Beschleunigung des Kraftfahrzeuges im Ansprechen auf das durch das Niederdrücken des Fahrpedals angeforderte Antriebsmoment darstellt. Die Beschleunigung bleibt für eine bestimmte Zeitdauer auf einem Maximalwert konstant, wie durch den Parallelabschnitt 56 der Kurve K9 beschrieben. Das heißt mit anderen Worten, dass das Elektrofahrzeug sich eine vergleichsweise lange Zeit mit hoher Beschleunigung nach vorne bewegt, die erst durch die Bremsbetätigung des Fahrers steil abfällt und zum Zeitpunkt t₂ den Nulldurchgang aufweist. Bei einer solchen lang andauernden hohen Beschleunigung des Elektrofahrzeugs besteht die akute Gefahr einer Kollision mit einem Objekt, bspw. einem weiteren Fahrzeug in der Nähe. Ferner wird durch die lange Beschleunigungsphase die hohe Maximalgeschwindigkeit Vₘₐₓ₁ (Fig. 1a) erreicht, die ein Mehrfaches der Maximalgeschwindigkeit Vₘₐₓ₂ beim erfindungsgemäßen Verfahren beträgt (Fig. 1a).

Die automatischen Fahrzeugreaktionen hingegen erfolgen praktisch ohne Zeitverzug, weil die Sensoren direkt nach der Hindernisüberwindung entsprechende Ausgangssignale zur weiteren Verarbeitung an die erfindungsgemäße Steuereinrichtung liefern. Im Vergleich dazu, reagiert der Fahrer verhältnismäßig langsam. Dieses unterschiedliche Reaktionsverhalten zwischen der erfindungsgemäßen Steuereinrichtung und dem Fahrer wirkt sich zum einen dadurch aus, dass die Periodendauer T₂ des Fahrzeugbeschleunigungsverlaufs beim herkömmlichen Verfahren ein Mehrfaches der Periodendauer T₁ des erfindungsgemäßen Verfahrens beträgt (T₂ >> T₁).

Die unterschiedlichen Reaktionszeiten wirken sich ferner auf den Anhalteweg des Kraftfahrzeugs aus. Der Anhalteweg bestimmt sich dabei aus dem während der Reaktionszeit zurückgelegten Weg und dem tatsächlichen Bremsweg. Da die Reaktionszeit bei der automatischen Steuerung praktisch 0 ist, ist in diesem Fall der Anhalteweg deutlich kleiner. Die durch den Pfeil B in Fig. 1a angezeigte Zeitspanne ist ein Maß für diese Differenz des Anhalteweges des herkömmlichen Verfahrens gegenüber dem erfindungsgemäßen Verfahren.

Die Betätigung des Fahrpedals durch den Fahrer beim erfindungsgemäßen Verfahren ist aus der Fig. 1b ersichtlich. Dort zeigt die Kurve K 10 den Verlauf der Fahrpedalstellung beim erfindungsgemäßen Verfahren. Nach dem Beginn des automatischen Brems- bzw. Verzögerungsvorgangs (Zeitpunkt t₈) ist das Fahrpedal noch vergleichsweise weit aus der Ruhelage ausgelenkt. Dabei wird das Fahrzeug dennoch verzögert (Fig. 1f). Dies bedeutet, dass die Steuerbefehlsautomatik Vorrang vor der manuellen Betätigung des Fahrers hat, um die manuellen und automatischen Steuerbefehle aufeinander abzustimmen. Nach dem der Fahrer zum Zeitpunkt t₄ eine Verzögerung des Fahrzeugs erfährt, nimmt er nach einer entsprechenden Reaktionszeit das Fahrpedal langsam zurück, um so zu verhindern, dass die Automation, die eine Verzögerung des Fahrzeugs beabsichtigt, und der Fahrer gegeneinander arbeiten. Bei sich zu stark ergänzenden manuellen Steuerbefehlseingaben und automatisch generierten Steuersignalen kann eine automatische Abstimmung dieser Steuersignale aufeinander erfolgen, um zum Beispiel eine übermäßig starke Verzögerung des Kraftfahrzeugs zu verhindern.

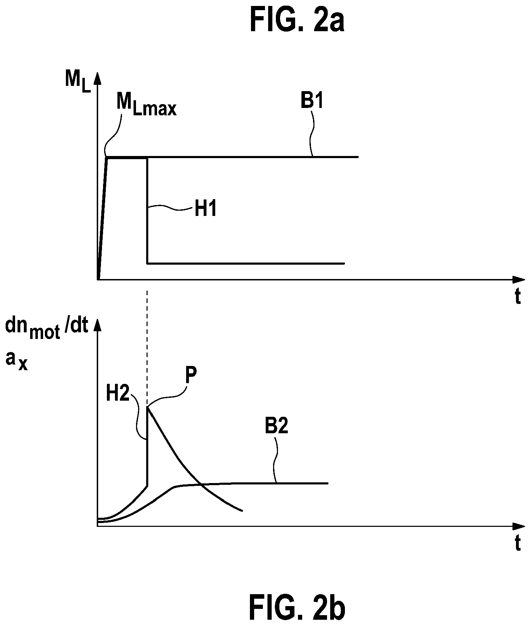

Um bei dem erfindungsgemäßen Verfahren in jedem Fall eine situationsgerechte Fahrzeugreaktion einzuleiten, ist vorzugsweise zu überprüfen, ob tatsächlich eine Hindernissituation vorliegt, das heißt ob tatsächlich ein Hindernis zu überwinden ist, oder ob ein hoher Fahrtwiderstand andere Ursachen hat, wie z.B. eine Anfahrt an einer Steigung (Berganfahrt). Hierzu zeigt die Figur 2a einen Graphen, bei dem das Motormoment M_{L} des das Elektrofahrzeug antreibenden Elektromotors als Funktion der Zeit bei einer Berganfahrt (Kurve B1) und bei einer Anfahrt über eine Hindernis (Kurve H1) aufgetragen ist. Die Figur 2b zeigt einen weiteren Graphen, bei dem die Motordrehbeschleunigung (dnₘₒₜ /dt) bzw. Fahrzeuglängsbeschleunigung (aₓ) bei der Berganfahrt (Kurve B2) und bei der Anfahrt über das Hindernis (Kurve H2) als Funktion der Zeit aufgetragen ist. Den beiden Graphen 2a und 2b liegt der gleiche Zeitmaßstab zugrunde. Bei einer Berganfahrt und beim Anfahren über das Hindernis steigt das Motormoment M_{L} zunächst bis auf einen Maximalwert M_{Lmax} an, ohne dass sich das Kraftfahrzeug bewegt. Charakteristisches Unterscheidungsmerkmal bei der Anfahrt am Bordstein ist jedoch die schlagartige Reduzierung des Lastmomentes, wenn das Hindernis überwunden wurde. Dies kann z.B. durch den durch den Peak P beschriebenen Sprung des Motormomentes M_{L}(detektierbar z.B. durch eine schlagartige Drehbeschleunigung des Rotors und/oder veränderte Stromaufnahme der elektrischen Antriebsmaschine) festgestellt werden. Damit ist ein Weg gezeigt, wie eine Anfahrt an einem blockierenden Hindernis von einer Anfahrt an einer Steigung unterschieden werden kann.

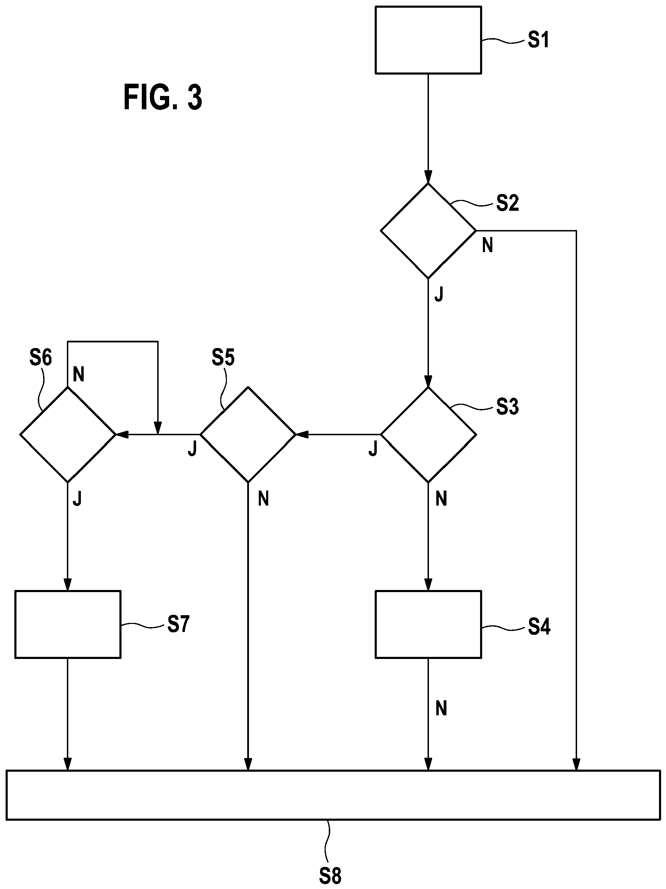

Fig. 3 zeigt ein Flussdiagramm des erfindungsgemäßen Verfahrens. Das Verfahren startet im Schritt S1, in dem ein Fahrer durch Betätigung des Fahrpedals ein Antriebsmoment anfordert. Nach dem Schritt S1 rückt das Verfahren zum Schritt S2 vor. Im Schritt S2 wird geprüft, ob eine Hindernissituation vorliegt, d.h. ob eine Fahrsituation besteht, bei der ein bodenniedriges Hindernis zu überwinden ist. Eine solche Hindernissituation wird erkannt, wenn die folgenden Ereignisse bzw. Randbedingungen a) bis f) erfüllt sind:
a) die erfindungsgemäße Steuereinrichtung erhält das Signal "Fahrzeugstillstand",
b) die erfindungsgemäße Steuereinrichtung erhält das Signal "Feststellbremse nicht betätigt",
c) die erfindungsgemäße Steuereinrichtung erhält das Signal "Betriebsbremse nicht betätigt",
d) die getriebeseitig eingelegte Fahrstufe ist nicht "N" oder "P",
e) der Fahrpedalgradient unterschreitet einen vorgebbaren minimalen Schwellenwert (was heißt, dass das Fahrpedal zögerlich betätigt wird),
f) das Antriebsmoment entsprechend dem Fahrerwunsch überschreitet einen vorgebbaren oberen Schwellenwert, ohne dass sich das Kraftfahrzeug bewegt.

Bei negativem Prüfungsergebnis im Schritt S2 wird das Verfahren im Beendigungsschritt S8 beendet.

Bei positivem Prüfungsergebnis im Schritt S2 wird das Verfahren mit dem Schritt S3 fortgesetzt. Im Schritt S3 wird überprüft, ob das vom Fahrer angeforderte Antriebsmoment ausreicht, um das Hindernis zu überwinden

Bei negativem Prüfungsergebnis im Schritt S3 (d.h. das Antriebsmoment reicht nicht zur Überwindung des Hindernisses aus) rückt das Verfahren zum Schritt S4 vor.

Im Schritt S4 wird zum Komponentenschutz vor thermischer Überlast nach einer applizierbaren Zeit das Antriebsmoment entsprechend einem vorgebbaren zeitlichen, bspw. rampenförmigen Verlauf reduziert und zugleich ein entsprechender Warnhinweis an den Fahrer ausgegeben.

Nach dem Schritt S4 wird das Verfahren im Beendigungsschritt S8 beendet.

Bei positivem Prüfungsergebnis im Schritt S3 wird das Verfahren mit dem Schritt S5 fortgesetzt, in dem geprüft wird ob eine Hindernissituation vorliegt oder ein erhöhter Fahrtwiderstand eventuell eine andere Ursache hat, wie etwa eine Anfahrt an einem Berg.

Um Wiederholungen zu vermeiden, wird auf die vorangegangene Beschreibung der Figuren 2a und 2b verwiesen, wo eine Möglichkeit, wie eine Hindernissituation von einer Berganfahrt unterschieden werden kann, im Einzelnen beschrieben ist.

In der Entscheidung S5 verzweigt sich das Verfahren, je nachdem, ob tatsächlich eine Hindernissituation vorliegt oder nicht. Wenn in der Entscheidung S5 festgestellt wird, dass keine Hindernissituation vorliegt, wird das Verfahren im Schritt S8 beendet.

Wenn in der Entscheidung S5 festgestellt wird, dass eine Hindernissituation vorliegt, das heißt ein Hindernis zu überwinden ist, geht das Verfahren zum Schritt S6 über.

Im Schritt S6 wird durch eine Sensorik erfasst, ob das Hindernis bereits überwunden worden ist. Wenn im Schritt S6 erfasst wird, dass das Hindernis überwunden worden ist, wird das Verfahren mit dem Schritt S7 fortgesetzt. Im Schritt S7 veranlasst die erfindungsgemäße Steuereinrichtung selbsttätig einen Bremseingriff, der beispielsweise von einer von einem elektronischen Stabilisierungsprogramm kontrollierten Bremse bereitgestellt werden kann. Gleichzeitig veranlasst die erfindungsgemäße Steuereinrichtung im Schritt S7 eine zügige Verringerung des auf die angetriebenen Räder übertragenen Antriebsmomentes. Dabei ist das Antriebsmoment auf die sich aufbauende Bremskraft abgestimmt, so dass ein schnelles aber komfortables Abbremsen ermöglicht wird. Nach dem Schritt S7 wird das Verfahren im Schritt S8 beendet.

Wenn im Schritt S6 festgestellt wird, dass das Hindernis noch nicht überwunden worden ist, wird der Schritt S6 solange wiederholt, bis eine Überwindung des Hindernisses festgestellt wird.

Zusammenfassend stellt die Erfindung ein Verfahren bereit, dass den Fahrer bei schwierigen Fahrsituationen entlastet, bei denen jeweils ein Bordstein zu überwinden ist, wie etwa einem Einparkvorgang in eine Parklücke oder beim Ausfahren aus einer Ausfahrt. Durch die Erfindung ist es möglich, solche Fahrsituationen insbesondere bei Elektrofahrzeugen sicher und zuverlässig zu beherrschen.

Es versteht sich, dass die vorliegende Erfindung vielfältig abgeändert werden kann, ohne den Erfindungsgedanken zu verlassen.

So ist es beispielsweise denkbar, dass nach der Überwindung eines Hindernisses bzw. eines hohen Fahrtwiderstandes (Wenn beispielsweise ein Bootsanhänger aus dem Wasser zu ziehen ist oder ein anderes Fahrzeug aus einem Graben zu ziehen ist) keine Verringerung des Antriebsmomentes oder gar eine Zunahme der Beschleunigung gewünscht ist. Durch einen entsprechenden Fahrerbefehl, der zum Beispiel gegeben wird, indem die ESP-Aus Taste betätigt wird, kann ein das erfindungsgemäße Verfahren ausführendes System deaktiviert werden. In diesem Fall greift nur der zuvor genannte thermische Schutz.

Ferner ist es grundsätzlich möglich, die Erfindung auch bei herkömmlichen, rein verbrennungsmotorisch angetriebenen Kraftfahrzeugen zu verwenden.

## Patentansprüche

1. Verfahren zur Unterstützung eines Fahrers eines Elektrofahrzeuges bei einem Fahrvorgang zur Überwindung eines bodenniedrigen Hindernisses mit langsamer Geschwindigkeit, wobei das Verfahren die Schritte aufweist:
- Übertragen (S1) eines Drehmoments an die anzutreibenden Räder zur Überwindung des Hindernisses,
- Erkennen (S6), dass das Hindernis überwunden worden ist, und
- automatisches Verringern (S7) des Drehmoments und/oder automatische Erzeugung eines Bremsmomentes zum Verzögern des Kraftfahrzeugs unmittelbar nach dem Erkennen, wobei das Erkennen (S6) der Hindernisüberwindung durch Auswerten einer Kenngröße des Elektromotors erfolgt, die insbesondere charakteristisch für eine Belastung des Elektromotors ist.

2. Verfahren nach Anspruch 1, wobei zur Erkennung (S6) der Hindernisüberwindung wenigstens eine externe und/oder eine interne Größe, wie die Fahrbahnneigung und/oder Zustände des Kraftfahrzeugs, wie die Geschwindigkeit und/oder die Beschleunigung des Kraftfahrzeuges, erfasst und ausgewertet wird.

3. Verfahren nach Anspruch 1 oder 2, wobei zum Erkennen (S6) der Hindernisüberwindung ein Druck in einem Reifen des Kraftfahrzeugs ausgewertet wird.

4. Verfahren nach einem der Ansprüche 1 bis 3, wobei eine Hindernissituation dann erkannt (S2) wird, wenn ein erkannter Anfahrwunsch des Fahrers vorliegt, ein Fahrpedalgradient einen vorgegebenen Schwellenwert unterschreitet und bei einem Aufbau eines Antriebsmoments auf einen vorgegebenen oberen Grenzwert keine Beschleunigung des Kraftfahrzeugs in Fahrtrichtung erzielt wird.

5. Verfahren nach Anspruch 4, wobei zur Bestimmung des Anfahrwunsches die Stellung einer Feststellbremse und/oder einer Betriebsbremse erfasst wird.

6. Verfahren nach Anspruch 4 oder 5, wobei zur Bestimmung des Anfahrwunsches die Stellung eines Wählorgans, insbesondere eines Wählhebels, erfasst wird, der zum Anwählen von verschiedenen getriebeseitig einzulegenden Fahrstufen und/oder zum Anwählen von verschiedenen Fahrprogrammen in verschiedene Wählpositionen bewegbar ist.

7. Verfahren nach einem der Ansprüche 1 bis6, wobei das Hindernis mittels einer Umfeldsensorik oder einer telemetrischen Einrichtung erkannt wird (S7).

8. Verfahren nach Anspruch 7, wobei die Umfeldsensorik als ein Kamera-, ein Ultraschall-, ein Radar- und/oder ein Lidar-System ausgeführt ist.

9. Steuereinrichtung für einen Kraftfahrzeugantriebsstrang, die dazu ausgelegt und eingerichtet ist, das Verfahren nach einem der Ansprüche 1 bis 8 auszuführen.

## Claims

1. Method for assisting a driver of an electric vehicle during a driving procedure to overcome a low-level obstacle at slow velocity, wherein the method has the following steps:
- transmitting (S1) a torque to the wheels to be driven to overcome the obstacle,
- recognizing (S6) that the obstacle has been overcome, and
- automatically decreasing (S7) the torque and/or automatically producing a braking torque to decelerate the motor vehicle immediately after the recognition, wherein the recognition (S6) of overcoming the obstacle is performed by analyzing a characteristic variable of the electric motor, which is characteristic in particular for a load of the electric motor.

2. Method according to Claim 1, wherein, to recognize (S6) overcoming the obstacle, at least one external variable and/or one internal variable, such as the roadway inclination and/or statuses of the motor vehicle, such as the velocity and/or the acceleration of the motor vehicle, is registered and analyzed.

3. Method according to Claim 1 or 2, wherein a pressure in a tire of the motor vehicle is analyzed to recognize (S6) overcoming the obstacle.

4. Method according to any one of Claims 1 to 3, wherein an obstacle situation is recognized (S2) if a recognized start indication of the driver exists, an accelerator pedal gradient falls below a predefined threshold value, and, in the event of a buildup of a drive torque to a predefined upper limiting value, no acceleration of the motor vehicle in the travel direction is achieved.

5. Method according to Claim 4, wherein the position of a parking brake and/or a service brake is registered to determine the start indication.

6. Method according to Claim 4 or 5, wherein the position of a selection element, in particular a selection lever, which is movable into various selection positions to select various gear steps to be engaged on the transmission and/or to select various driving programs, is registered to determine the start indication.

7. Method according to any one of Claims 1 to 6, wherein the obstacle is recognized by means of an environmental sensor system or a telemetric unit (S7).

8. Method according to Claim 7, wherein the environmental sensor system is embodied as a camera, ultrasound, radar, and/or lidar system.

9. Control unit for a motor vehicle drivetrain, which is designed and configured for the purpose of executing the method according to any one of Claims 1 to 8.

## Revendications

1. Procédé d'assistance au conducteur d'un véhicule électrique dans une manoeuvre de roulage opérée pour surmonter à vitesse lente un obstacle proche du sol, le procédé présentant les étapes suivantes :
- transmission (S1) d'un couple de rotation aux roues motrices en vue de surmonter l'obstacle,
- vérification (S6) que l'obstacle a été surmonté et
- immédiatement après la vérification, réduction automatique (S7) du couple de rotation et/ou application automatique d'un couple de freinage en vue de ralentir le véhicule automobile,
la vérification (S6) que l'obstacle a été surmonté s'effectuant par évaluation d'une grandeur caractéristique du moteur électrique, caractéristique notamment d'une mise en charge du moteur électrique.

2. Procédé selon la revendication 1, dans lequel pour vérifier (S6) que l'obstacle a été surmonté, au moins une grandeur externe et/ou une grandeur interne, par exemple la pente de la chaussée et/ou des états du véhicule automobile, par exemple la vitesse et/ou l'accélération du véhicule automobile sont saisies et évaluées.

3. Procédé selon les revendications 1 ou 2, dans lequel pour vérifier (S6) que l'obstacle a été surmonté, la pression qui règne dans un bandage pneumatique de roue du véhicule automobile est évaluée.

4. Procédé selon l'une des revendications 1 à 3, dans lequel la présence d'un obstacle est détectée (S2) s'il est détecté que le conducteur souhaite démarrer, que le gradient de la pédale d'accélération n'atteint plus une valeur de seuil prédéterminée ou que le véhicule automobile ne subit aucune accélération dans la direction de roulage alors que le couple a été établi à une valeur limite supérieure prédéterminée.

5. Procédé selon la revendication 4, dans lequel la position du frein de stationnement et/ou du frein de service est détectée pour déterminer le souhait de démarrage.

6. Procédé selon les revendications 4 ou 5, dans lequel la position d'un organe de sélection, en particulier d'un levier de sélection qui peut être déplacé en différentes positions de sélection pour sélectionner différents étages de roulage sur la transmission et/ou pour sélectionner différents programmes de roulage, est saisie pour déterminer le souhait de démarrage.

7. Procédé selon l'une des revendications 1 à 6, dans lequel l'obstacle est détecté (S7) au moyen d'un ensemble de capteurs d'environnement ou d'un dispositif de télémétrie.

8. Procédé selon la revendication 7, dans lequel l'ensemble de capteurs d'environnement est réalisé sous la forme d'un système de caméras, d'un système à ultrasons, d'un système radar et/ou d'un système lidar.

9. Dispositif de commande pour train d'entraînement d'un véhicule automobile conçu et réalisé de manière à exécuter le procédé selon l'une des revendications 1 à 8.
